(19) Europäisches Patentamt
European Patent Office
Office européen des brevets

(11) Publication number: **0 295 258 B1**

(12) **EUROPEAN PATENT SPECIFICATION**

(45) Date of publication of patent specification:
**21.08.91 Bulletin 91/34**

(51) Int. Cl.⁵: **B27K 3/02**

(21) Application number: **87901690.5**

(22) Date of filing: **23.02.87**

(86) International application number:
**PCT/NL87/00005**

(87) International publication number:
**WO 87/05251 11.09.87 Gazette 87/20**

(54) **A PLUG.**

(30) Priority: **03.03.86 NL 8600528**

(43) Date of publication of application:
**21.12.88 Bulletin 88/51**

(45) Publication of the grant of the patent:
**21.08.91 Bulletin 91/34**

(84) Designated Contracting States:
**AT BE CH DE FR GB IT LI LU NL SE**

(56) References cited:
**EP-A-01 257 28**
**EP-A-01 393 18**
**WO-A-83/03997**

(73) Proprietor: **Woudsma, Jacob**
**Vogezenlaan 23**
**NL-5801 PX Venray (NL)**

(72) Inventor: **Woudsma, Jacob**
**Vogezenlaan 23**
**NL-5801 PX Venray (NL)**

(74) Representative: **Kooy, Leendert Willem et al**
**OCTROOIBUREAU VRIESENDORP & GAADE**
**P.O. Box 266**
**NL-2501 AW The Hague (NL)**

EP 0 295 258 B1

## Description

The invention relates to a plug of deformable material, such as wood, synthetic material or the like, for clampingly sealing a recess provided in wood, in which a cavity is arranged in the body of the plug, in which cavity a crushable ampulla or holder with a wood preservative can be accommodated, said plug being provided with at least one clamping sealing means engaging with the inner wall of the recess.

A similar plug is known from EP-A-139,318.

The plug has the drawback that as a result of frequently occurring inaccuracies concerning shape, position and dimensions of the recess, the top of the plug will usually not be perpendicular to the surface of the recess, and will therefore not flush with said surface. These deviations occur when a drill cavity or recess is not drilled perpendicular to the wood surface. The result is an oblique cavity which is round though. Furthermore, corrections are often made during drilling whereby the drill turns to a wrong direction. Subsequently, the drill cavity is oblique with respect to the wood surface and, moreover, it is oval. This causes an inferior sealing with an accommodated plug, which, when using a wood preservative that is applied under pressure, results in an escape of said wood preservative past the plug. This yields to a less deep penetration of the wood preservative into the wood located in the space around the recess, as well as to discolouration, matting, soaking off or peeling off of the paint on the wood surface. This happens, particularly when wood that is only slightly affected has to be treated. As the plug cannot move with respect to the ampulla, said ampulla may break before the sealing of the recess has been effected. Furthermore, when using a sealing clamping means with ribs, in which the sloping surface of each rib forms an angle over 45° with the horizontal, the wood of the recess is deformed and damaged, which will promote leakage of the wood preservative.

The unequal flushing of the plug and the wood surface requires a smoothly burnishing as a preparatory working prior to repainting.

The above-stated problems may even be increased when the plug is countersunk in the finishing operation, because of which the amount of pressure increases to such an extent that leakage may occur.

The plug does not provide the possibility of visual inspection since the plug cannot be removed without damaging the wood.

The plug does not provide for any adaptation to the heterogenous structure of the natural product wood and to the moisture, of which a high percentage appears in affected wood in particular so that the plug is ousted from the wood to the outside.

The invention aims to remove the above-stated drawbacks and for that purpose is characterized in that at least two separate, cooperating clamping sealing means are arranged on the end of the plug facing away from its drive-in end, said clamping sealing means being mutually movable so that the sealing means being positioned closest to the wood surface always seals flush with the wood surface, and in that before driving the plug into the recess, the outer radial dimension of at least one of the sealing means is greater than the inner radial dimension of the corresponding accommodating portion of the recess to such an extent, (eg. 1 mm) that after the plug has been driven into the recess no damage of the wood or leakage of wood preservative occurs.

The present invention provides for a permanent sealing of the recess with preservative liquid, a sealing when the top of the plug is damaged, a sealing against gases which eventualy could penetrate into the housing, as well as the possibility of a proper finishing with the present means. The system is safe to operate which implies that the system compensates for eventual mistakes made by the user, within certain tolerances, i.e leakage may not occur. The system is simple and provides for the shortest possible treating time. The ampulla is always completely crushed after driving in the plug, and the wood preservative penetrates into the wood, under pressure and with complete measurement.

The plug comprises various layers and, if necessary, the recess can be treated with a primer. Hereby, each layer has a specific property such as the blocking or accommodating of the wood preservative.

The non-penetrating sealing portions of the plug may consist of wood (laminated, three-ply, multi-ply, etc.) or a synthetic material like polyurethane or different types.

The plug may furthermore be impregnated and provided with a rubber ring which has the property of also sealing gases and which may serve as a pivot for the sealing means, especially with improper drilled recesses.

The gastight sealing is especially important in the application of a dry pill which upon dissolving the elements may form gases.

The mutual movability of the separate portions of the plug may also be achieved by breaking certain portions of the plug or by making the plug flexible.

As stated already, the present plug may comprise of various layers. In mutually, flexibly connecting these layers by means of various known cementing agents (of which the si-cementing agents, polyurethane and polysulphide cementing agents are the most suitable ones), thus the opportunity is created that the flexible plug follows the course of a bevelled drill cavity or recess. The use of a rubber O-ring is also important when the drill cavity or recess is oval. This O-ring overcomes the tolerances between the plug, which is round, and the drill wall, which is oval. A plug, which portions are breakable is especially relevant to smaller ampullas, since no additional layers can be used, then the plug might become so large that it protrudes from the wood surface more than half. Therefore, breakage should take place. This breakage should, as much take place in a controlled manner which, however, can be reached by a right choice of materials.

The problem which appears with oval drills can especially be solved by the choice of materials, in which, in particular, natural materials and rather specified synthetics are qualified. These materials may for instance consist of polyurethane which is very sensitive to moisture. Although nylon has a moist-regulating effect this is not the answer. Natural materials like DMF are preferred, since they are excellently compatible with wood in order to solve the above-stated problem in this way.

In an embodiment according to the invention, the plug is constructed of a similar plug and a disc-shaped sealing means of another material. The main plug is provided with a slot in which a rubber ring (or a ring made of another material) having a certain diameter can be positioned. The plug is use-friendly, i.e. the choice of materials of the cylindrical disc may be chosen to size (light or dark coloured). Due to this, the plug can be easily processed by means of grinding. Subsequently, the user will not use different (illegal) means that quickly. Since the plug comprises various layers, a guaranteed sealing is obtained, also against gases and solid substances. The material of the plug may be chosen such that it can expand or shrink with different moisture concentrations in order to prevent cracking of the paint. This plug is especially suitable for solving sealing problems in bevelled drills or recesses.

In manufacturing in wood of poor quality (through the influence of a nail or the like or the stage of wood rot) the rubber ring overcomes the tolerances produced by drilling. Then, it turned out that wood having a high moisture percentage smashes during drilling. The rubber ring for a guaranteed gastight sealing takes care that dissolved substances cannot leave the wood (environmental polution).

A different embodiment relates to a removable T-shaped plug in which the main plug has a circumferential groove for an O-ring which engages a jacket that extends around the main plug, of which jacket the drive-in end comprises a tapered inner wall portion. Hereby the main plug is anchored as a whole as the tapered portion enters into the wood of the drill. The mutual movement of the sealing means is enabled here, by means of the pivoting action of the O-sealing ring.

In some embodiments according to the invention the main plug has been taper-constructed on its end facing the wood surface so that with respect to this the other plug disposed on top of said main plug can move, which results in that the plug will always coincide with the wood surface even without drilling perpendicular onto said wood surface.

If a clamping jacket is used in the above-described embodiments, a proper sealing will be obtained before the ampulla is crushed and consequently releases its contents. The use of a clamping jacket which comprises a tapered drive-in surface serves the purpose of a sealing between the passage of two recesses or drills with various diameters. The O-ring which is accommodated in the circumferential groove of the main plug is used for sealing in hard kinds of wood and for wood that is weakened by putrefaction. In arranging the plug with ampulla or an impregnated plug somewhat sunken, completion may be effected by means of a round wooden disc which yields to the wood surface, which prevents the plugs from being visible.

The O-sealing ring is preferably mounted on the end of the plug facing away from the drive-in end as the sealing, upon drilling still has to remove itself, after crushing of the ampulla, with respect to the proper crushing of the glass ampulla. The drilling of the plug into the drill or recess will not cause any damage thereof. A similar damage (splitting, chips forming in the wall of the recess or drilling) would cause a leakage of the wood preservative.

Finally, it is remarked that the synthetic material used, can be strengthened with glass in order to avoid roll up of the clamping jacket. At the open end of the drill the inner wall of the drill be provided with a layer of primer or the like for the drill of the plug, especially so as to obtain a gastight high pressure sealing.

Some embodiments of the plug are provided, with sawtooth-shaped clamping means, arranged at the outer circumference of the plug, of which the sloping surfaces form an angle smaller than or equal to 45°.

The invention will now be further elucidated on the basis of the enclosed drawing.

Figures 1, 2, 3, 4, 5, 6, 8 and 9 each show half an axial section and a semi-view of the various embodiments according to the invention.

Figure 7 shows a cross-section of the plug according to figure 6, regarded along the arrows VII-VII, on a large scale.

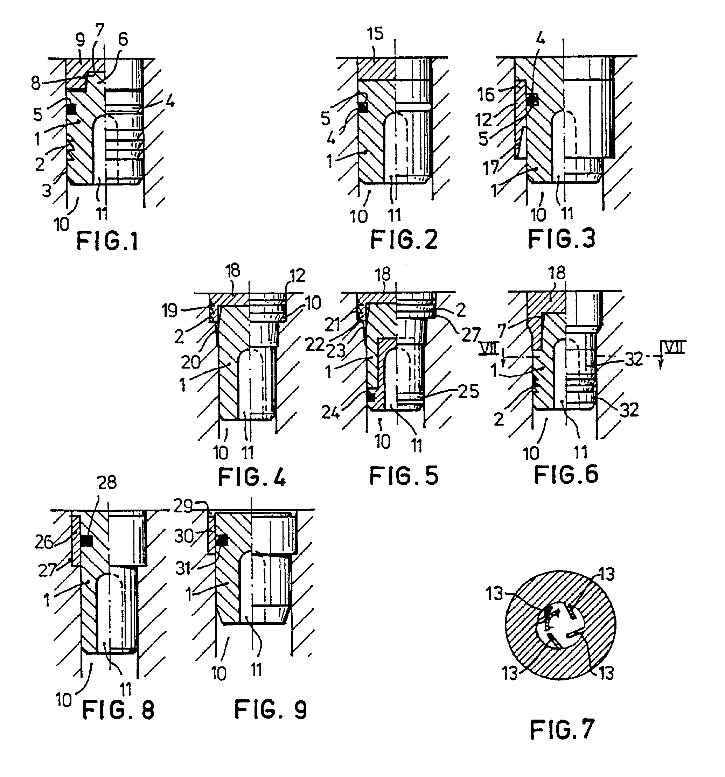

The plug 1 according to figure 1 comprises a number of sawtooth-shaped clamping means 2 with various radial dimensions, a guiding edge 3 being arranged at one side of these clamping means and an O-sealing ring 4 in a circumferential groove 5 at the other side. At its end facing away from the drive-in end the plug is provided with a central pin 6 which has a bevel 7 at the end facing the wood surface. The pin 6 fits into a cavity 8 of a cylindrical wooden disc 9 that can pivot around the pin 6, due to its bevel so that if the drilled recess 10 in the wood is not perpendicular to the wood surface, the disc can slightly be adjusted so, that it flushes with the wood surface. The plug furthermore comprises a cavity 11 for accomodating and attaching an ampulla by means of spring lugs 13 (vide figure 7).

Figure 2 shows a recess which is made of wood and which comprises a circumferential groove 5 for accommodating an O-sealing ring 4. The sealing means 15, devised as a wooden disc forms the final sealing and its structure, colour and the like are adapted to that of the wood surface.

In figure 3 the plug 1 has a T-shaped axial cross-section. In the broadened portion 12 a clamping jacket 16 is disposed, having a tapered inner wall portion 17 at the inner circumference of its drive-in end, so as to form a space that is filled with wood rests left behind as the recess is drilled during driving-in the clamping jacket, after which the plug 1 is driven in. The clamping jacket engages an O-sealing ring disposed in a circumferential groove 5.

Figure 4 shows a plug that comprises a cap-shaped sealing means 18 with integrated clamping jacket 19, on which a number of sawtooth-shaped clamping means 2 is disposed. The clamping jacket 19 comprises a tapered drive-in end 20 and is located in the broadened portion 12 of the recess 10. At its end for accommodating the cap-shaped sealing means, the plug comprises a bevel so that the sealing means can pivot with respect to the other sealing means.

In the plug of figure 5 a sawtooth-shaped clamping means 2 is arranged on the cap-shaped sealing means 18 and an adjacent, bevelled cylindrical collar 22. The clamping jacket 21 comprises a drive-in end 23. On the drive-in end of the plug a circumferential groove 24 is provided, in which an O-sealing ring is accommodated. At its receiving end of the cap-shaped sealing means, the plug comprises a bevel for pivotably receiving said means 18.

At its drive-in end, the plug 1 of figure 6 comprises a number of sawtooth-shaped clamping means 2, defined by guiding surfaces 32 and 32. At its receiving end, the plug has a bevel 7 for the pivotable cap-shaped sealing means 18.

The plug 1 according to figure 8 has a T-shaped axial section, the clamping jacket 26 being accommodated in a broadened portion 27 of the recess 10. The inner side of the clamping jacket is connected to an O-sealing ring 28 provided in a circumferential groove of the plug.

The plug 1 shown in figure 9 has a substantially rectangular, axial section, the broadened portion 29 of the recess 10 accommodating the clamping jacket 30, of which the inner side is connected with an O-sealing ring 31 provided in the circumferential groove of the plug, in which both the clamping jacket and the plug extend until below the wood surface. The space above the plug is filled up with a sealing material up to the level of the wood surface.

It is preferred that resilient (13, figure 7) lugs are provided in the above-described embodiments, which lugs extend from the inner wall of the attachment cavity for the ampulla (not shown) to within said cavity and in its longitudinal direction.

The sloping surfaces on the sawtooth-shaped clamping means form an angle with the horizontal that is smaller than or equal to 45°.

The taper of the drive-in end of a clamping means, e.g. as shown in figure 4, no. 20, lies between 90-96° with respect to a surface perpendicular to the central axis of the plug. As synthetic material for the clamping jacket and the cap, PVC or ABS is used. These materials are well-suited for repainting and swell upon contact with organic or inorganic liquids.

## Claims

1. Plug of deformable material, such as wood, synthetic material or the like, for clampingly sealing a recess in wood, in which a cavity in the body of the plug is provided, in which cavity a crushable ampulla or holder with a wood preservative can be accommodated, said plug being provided with at least one clamping sealing means engaging the inner wall of the recess, **characterized in that** at least two separate, cooperating clamping sealing means are arranged at the end of the plug facing away from the drive-in end of the plug, said clamping sealing means being mutually movable so that the sealing means, being positioned closest to the wood, seals on level with the wood surface, and in that, before driving the plug into the recess, the outer radial dimension of at least one of the sealing means is greater than the internal radial dimension of the corresponding accommodating portion of the recess to such an extent that, after the plug has been driven into the recess, no damage of wood or leakage of the wood preservative occurs.

2. Plug according to claim 1, **characterized in that** one of the separate cooperating clamping sealing means has the shape of a cylindrical clamping jacket that is arranged on the outer circumference side of the plug.

3. Plug according to claim 1, **characterized in that** one of the separate, cooperating, clamping sealing means has the shape of a cylindrical wooden disc for providing a flat clamping end which seals the open end of the recess.

4. Plug according to claim 2, **characterized in that** the cylindrical clamping jacket is integrated in a cap-shaped, clamping sealing means that is pivotable onto an end of the plug that is provided with a bevel.

5. Plug according to claims 1 and 3, in which a number of sawtooth-shaped clamping means have been arranged, **characterized in that** viewed in the axial direction of the plug a guide edge is provided on the drive-in end of the plug and an O-ring is provided in a circumferential groove on the other end, followed by a cylindrical disc having a central cavity to accommodate a central pin, with a bevelled edge, of said plug.

6. Plug according to claims 1 and 3, **characterized in that** the plug (1) is made of wood, is cylindrical and has a circumferential groove (5) for accommodating an O-ring (4).

7. Plug according to claims 1 and 2, **characterized in that** the clamping jacket (16) has a tapered inner wall portion (17) at the inner circumference of its drive-in end, said clamping jacket engaging an O-ring (4) provided in a circumferential groove (5) of said plug.

8. Plug according to claims 1 and 4, in which a number of sawtooth-shaped clamping means (2) is arranged on the body of the plug, **characterized in that** the clamping means (2) are arranged on the clamping jacket (19), which is provided with a tapered drive-in end (20).

9. Plug according to claims 1 and 4, in which a number of sawtooth-shaped clamping means is provided on the body of the plug, **characterized in that** the saw-tooth-shaped clamping means (21) are arranged on the cap-shaped sealing means (18), also comprising a cylindrical collar (22) provided with a bevel, said sealing means comprising a tapered drive-in end, and in that the plug at its drive-in end comprises an O-ring provided in a circumferential groove (24).

10. Plug according to claims 1 and 4, in which a number of sawtooth-shaped clamping means is provided on the body of the plug, **characterized in that** the clamping means (2) are arranged on the drive-in end of the plug and are defined by guiding surfaces (32 and 33 respectively), said plug comprising a bevel (7) at the end that accommodates the pivotable cap-shaped sealing means.

11. Plug according to claims 5 and 10, **characterized in that** the sawtooth-shaped clamping means have various outer diameters.

12. Plug according to claims 5 and 10, **characterized in that** each of the sloping surfaces of the sawtooth-shaped clamping means form an angle, smaller than or equal to 45°, with the horizontal.

13. Plug according to claims 5 and 10, in which lugs are provided for securing the ampulla, **characterized in that** the lugs extend from the inner wall of the securing cavity for the ampulla into said cavity and in its longitudinal direction.

14. Plug according to claims 5 and 10, **characterized in that** the taper of the drive-in end of a plug with respect to a surface, perpendicular to the centre line of the plug, amounts to 90°-96°.

15. Plug according to claims 5 and 10, **characterized in that** the synthetic material of the clamping jacket and the cap-shaped sealing means is PVC.

16. Plug according to claims 5 and 10, **characterized in that** the synthetic material of the clamping jacket and the cap-shaped sealing means is ABS.

17. Plug according to claims 5 and 10, **characterized in that** the synthetic material is provided with a glass reinforcement.

18. Plug according to claims 5 and 10, **characterized in that** the difference between the outer diameter of the plug and the inner diameter of the bore is 1 mm.

19. Plug according to claims 5 and 10, **characterized in that** the outer diameter of the wooden plug is equal to the outer diameter of the drive-in end of a cap-shaped sealing means having an outer diameter the opposing end of the cap-shaped sealing means.

20. Plug according to claims 5 and 10, **characterized in that** the outer diameter of the wooden sealing means is equal to the inner diameter of the drive-in end of the cap-shaped sealing means, which has an outer centre line at said end being smaller than the one of its opposing end.

21. Plug according to claim 3, **characterized in that** the disc is made of multi-ply wood.

22. Method of treating a recess in wood for accommodating a plug according to claim 1, **characterized in that** a layer of a liquid or paste-like composition, e.g. primer, cement, glue, cementing agent, repair agent or the like, is arranged on the inner wall of the recess.

**Patentansprüche**

1. Stöpsel aus deformierbarem Material wie Holz, synthetischem Material oder dergleichen zum festklemmenden Abdichten einer Aussparung in Holz, bei welchen ein Hohlraum in dem Körper des Stöpsels vorgesehen ist, in welchem Hohlraum eine zerquetschbare Ampulle oder ein Behälter mit einem Holzschutzmittel untergebracht werden kann, wobei der Stöpsel mit wenigstens einem Klemmdichtungsmittel versehen ist, welches mit der Innenwand der Aussparung im Eingriff ist, dadurch gekennzeichnet, dass wenigstens zwei einzelne zusammenarbeitende Klemmdichtungsmittel an dem von dem Eintreibende des Stöpsels abgewandten Ende des Stöpsels angeordnet sind, wobei die Klemmdichtungsmittel zueinander beweglich sind, so dass das Dichtungsmittel, das der Holzoberflache am nächsten positioniert ist, immer auf ebener Höhe mit der Holzoberfläche abdichtet, und dass vor dem Eintreiben des Stöpsels in die Aussparung hinein die äussere radiale Abmessung wenigstens eines der Dichtungsmittel grösser ist als die innere radiale Abmessung des jeweiligen Aufnahmeabschnitts der Aussparung in einem Ausmass, dass keine Beschädigung von Holz oder kein Aussickern des Holzschutzmittels auftritt, nachdem der Stöpsel in der Aussparung eingetrieben worden ist.

2. Stöpsel nach Anspruch 1, dadurch gekennzeichnet, dass eine der einzelnen zusammenarbeitenden Klemmdichtungsmittel die Gestalt einer zylindrischen Klemmhülse aufweist, die an der Aussenumfangsseite des Stöpsels angeordnet ist.

3. Stöpsel nach Anspruch 1, dadurch gekennzeichnet, dass eines der einzelnen, zusammenarbeitenden Klemmdichtungsmittel die Gestalt einer zylindrischen hölzernen Scheibe aufweist, um ein flaches Festklemmende zu bilden, welches das offene Ende der Einsparung versiegelt.

4. Stöpsel nach Anspruch 2, dadurch gekennzeichnet, dass die zylindrische Klemmhülse in einem kappenförmigen Klemmdichtungsmittel integriert ist, das auf ein Ende des Stöpsels drehbar ist, das mit einer Abschrägung versehen ist.

5. Stöpsel nach Ansprüchen 1 und 3, in welchem eine Anzahl sägezahnförmiger Klemmmittel angeordnet worden ist, dadurch gekennzeichnet, dass in der Axialrichtung des Stöpsels betrachtet eine Führungskante an dem Eintreibende des Stöpsels vorgesehen ist und ein O-ring, in einer Umfangsnute an seinem gegenüberliegenden Ende vorgesehen ist, nachgefolgt von einer zylindrischen Scheibe mit einem zentralen Hohlraum zur Aufnahme eines zentralen Stiftes des Stöpsels mit einem abgeschrägten Ende des genannten Dichtungsmittels.

6. Stöpsel nach Ansprüchen 1 und 3, dadurch gekennzeichnet, dass der Stöpsel (1) aus Holz besteht, zylindrisch ist und eine Umfangsnute (5) zur Aufnahme eines O-Ringes (4) aufweist.

7. Stöpsel nach Ansprüchen 1 und 2, dadurch gekennzeichnet, dass die Klemmhülse (16) einen abgeschrägten Innenwandabschnitt (17) an dem inneren Umfang ihres Eintreibendes aufweist, wobei die Klemmhülse mit einem O-Ring (4) in Berührung ist, der in einer Umfangsnute (5) des Stöpsels angeordnet ist.

8. Stöpsel nach Ansprüchen 1 und 4, in welchem eine Anzahl sägezahnförmiger Klemmmittel (2) an dem Körper des Stöpsels angeordnet ist, dadurch gekennzeichnet, dass die Klemmmittel (2) an der Klemmhülse (19) angeordnet sind, welche mit einem abgeschrägten Eintreibende (20) versehen ist.

9. Stöpsel nach Ansprüchen 1 und 4, in welchem eine Anzahl sägezahnförmiger Klemmmittel an dem Körper des Stöpsels vorgesehen ist, dadurch gekennzeichnet, dass die sägezahnförmigen Klemmmittel (21) an dem kappenförmigen Dichtungsmitel (18) angeordnet sind, auch versehen mit einer mit einem Konus versehenen zylindrischen Manschette (22), wobei das Dichtungsmittel ein abgeschrägtes Eintreibende umfasst, und dass der Stöpsel an seinem Eintreibende mit einem O-Ring versehen ist, der in einer Umfangsnute (24) angeordnet ist.

10. Stöpsel nach Ansprüchen 1 und 4, in welchem ein Anzahl sägezahnförmiger Klemmeinrichtungen an dem Körper des Stöpsels vorgesehen ist, dadurch gekennzeichnet, dass die Klemmmittel (2) an dem Eintreibende des Stöpsels angeordnet sind und durch Führungsflächen (32 bzw. 33) definiert sind, wobei der Stöpsel eine Abschrägung (7) an dem Ende umfasst, das das schwenkbare kappenförmige Dichtungsmittel aufnimmt.

11. Stöpsel nach Ansprüchen 5 und 10, dadurch gekennzeichnet, dass die sägezahnförmigen Klemmmittel unterschiedliche Aussendurchmesser aufweisen.

12. Stöpsel nach Ansprüchen 5 und 10, dadurch gekennzeichnet, dass jede der geneigten Flächen der sägezahnförmigen Klemmmittel einen Winkel von weniger oder gleich 45° mit der Horizontale bildet.

13. Stöpsel nach Ansprüchen 5 und 10, in welchem Lippen zum Befestigen der Ampulle vorgesehen sind, dadurch gekennzeichnet, dass die Lippen sich von der Innenwand des Befestigungshohlraume für die Ampulle in den Hohlraum hinein und in seiner Längsrichtung erstrecken.

14. Stöpsel nach Ansprüchen 5 und 10, dadurch gekennzeichnet, dass die Abschrägung des Eintreibendes eines Stöpsels bezüglich einer zu der Mittelachse des Stöpsels senkrechten Fläche 90° bis 96° beträgt.

15. Stöpsel nach Ansprüchen 5 und 10, dadurch gekennzeichnet, dass das synthetische Material der Klemmhülse und des kappenförmigen Dichtungsmittels PVC ist.

16. Stöpsel nach Ansprüchen 5 und 10, dadurch gekennzeichnet, dass das synthetische Material der Klemmhülse und des kappenförmigen Dichtungsmittels ABS ist.

17. Stöpsel nach Ansprüchen 5 und 10, dadurch gekennzeichnet, dass das synthetische Material mit einer Glasverstärkung versehen ist.

18. Stöpsel nach Ansprüchen 5 und 10, dadurch gekennzeichnet, dass die Differenz zwischen dem Aussendurchmesser des Stöpsels und dem Innendurchmesser der Bohrung 1 mm beträgt.

19. Stöpsel nach Ansprüchen 5 und 10, dadurch gekennzeichnet, dass der Aussendurchmesser des Holzstöpsels gleich dem Aussendurchmesser des Eintreibendes eines kappenförmigen Dichtungsmittels ist, das am Ende einen Aussendurchmesser aufweist, welcher kleiner ist als der des gegenüberliegenden Endes des kappenförmigen Dichtungsmittels.

20. Stöpsel nach Ansprüchen 5 und 10, dadurch gekennzeichnet, dass der Aussendruchmesser des hölzernen Dichtungsmittel gleich dem Innendurchmesser des Eintreibendes des kappenförmigen Dichtungsmittels ist, welches an diesem Ende eine äussere Mittenlinie aufweist, die kleiner ist als die seines entgegengesetzten Endes.

21. Stöpsel nach Anspruch 3, dadurch gekennzeichnet, dass die Scheibe aus mehrsichtigem Sperrholz besteht.

22. Verfahren zur Behandlung einer Aussparung zur Aufnahme eines Stöpsels gemäss Anspruch 1, dadurch gekennzeichnet, dass eine Schicht einer flüssigen oder pasten-artigen Zusammensetzung, zum Beispiel Grundierung, Zement, Leim, Kitt, Reperaturmittel oder dergleichen, an der Innenwand der Aussparung angeordnet wird.

## Revendications

1. Tampon déformable, en bois, en matière synthétique ou analogue, pour étancher par serrage un évidement ménagé dans du bois, une cavité étant formée dans le corps du tampon pour recevoir une ampoule ou récipient pouvant être écrasé et contenant un conservateur du bois, ledit tampon étant muni d'au moins un moyen d'étanchéité par serrage coopérant avec la paroi intérieure de l'évidement, caractérisé en ce qu'au moins deux moyens distincts d'étanchéité par serrage sont agencés en coopération à l'extrémité du tampon opposée à son extrémité de pénétration, lesdits moyens d'étanchéité étant mutuellement mobiles de sorte que le moyen d'étanchéité par serrage qui est placé le plus près de la surface du bois,constitue toujours une étanchéité au niveau de la surface du bois, et en ce qu'avant d'introduire le tampon dans l'évidement, la dimension radiale extérieure d'au moins un des moyens d'étanchéité est supérieure à la dimension radiale intérieure de la partie de logement correspondante de l'évidement dans uns mesure telle que, lorsque le tampon à été introduit dans l'évidement, aucune dégradation du bois ni fuite du conservateur du bois ne se produisent.

2. Tampon selon la revendication 1, caractérisé en ce que l'un des moyens distincts d'étanchéité par serrage qui cooperant, présente la forme d'une enveloppe cylindrique de serrage qui est disposée autour de la périphérie extérieure du tampon.

3. Tampon selon la revendication 1, caractérisé en ce que l'un des moyens distincts d'étanchéité par serrage, qui cooperent, affecte la forme d'un disque cylindrique en bois pour former une extrémité de serrage plate qui étanche l'extrémité ouverte de l'évidement.

4. Tampon, selon la revendication 2, caractérisé en ce que l'enveloppe de serrage cylindrique fait partie intégrante d'un moyen d'étanchéité de serrage en forme de capsule qui peut pivoter par rapport à une des extrémités du tampon qui est tronconique.

5. Tampon selon l'une quelconque des revendications 1 et 3, dans lequel un certain nombre de moyens de serrage en forme de dents de scie ont été agencés, caractérisé en ce que, dans la direction axiale du tampon, un arrêt de guidage est formée à l'extrémité d'introduction du tampon, en ce qu'un joint torique est placé dans une gorge périphérique de son extrémité opposée, tandis que le tampon est suivi d'un disque cylindrique ayant une cavité centrale destinée à recevoir un pivot central tronconique dudit tampon.

6. Tampon selon l'une quelconque des revendications 1 et 3, caractértisé en ce que le tampon (1) est fabriqué en bois, en ce qu'il est cylindrique, tandis que sa périphérie comporte une gorge (5) destinée à recevoir un joint torique (4).

7. Tampon selon l'une quelconque des revendications 1 et 2, caractérisé en ce que l'enveloppe de serrage (16) comporte une paroi interne tronconique (17) située sur la périphérie intérieure de son extrémité d'introduction, ladite enveloppe de serrage venant en prise avec un joint torique (4) monté dans une gorge périphérique (5) dudit tampon.

8. Tampon selon l'une quelconque des revendications 1 et 4, dans lequel un certain nombre de moyens de serrage (2) en forme de dents de scie sont agencés sur son corps, caractérisé en ce que les moyens de serrage (2) sont agencés sur une enveloppe de serrage (19) qui porte une extrémité d'entrée conique (20).

9. Tampon selon l'une quelconque des revendications 1 et 4, comprenant un certain nombre de moyens de serrage en forme de dents prévus sur son corps, caractérisé en ce que les moyens de serrage (21) en forme de dents de scie sont disposés sur un moyen d'etanchéité (18) en forme de capsule comportant également un collier cylindrique (22) comprenant un biseau, ledit moyen d'étanchéité étant pourvu d'une extrémité d'entrée conique, et en ce qu'un joint torique est placé dans une gorge périphérique (24) ménagée à l'extrémité d'introduction du tampon.

10. Tampon selon l'une quelconque des revendications 1 et 4, dans lequel un certain nombre de moyens de serrage en forme de dents de scie sont prévus sur son corps, caractérisé en ce que les moyens de serrage (2) sont agencés sur l'extrémité d'entrée du tampon et sont délimités par des surfaces de guidage (32 et 33 respectivement), ledit tampon comprenant un tronc de cône (7) à l'extrémité qui reçoit le moyen d'étanchéité pivotant en forme de capsule.

11. Tampon selon l'une quelconque des revendications 5 et 10, caractérisé en ce que les moyens de serrage en forme de dents de scie ont des diamètres extérieurs variés.

12. Tampon selon l'une quelconque des revendications 5 et 10, caractérisé en ce que chacune des surfaces inclinées des moyens de serrage en forme de dents de scie fait un angle inférieur ou égal 45° avec l'horizontale.

13. Tampon selon l'une quelconque des revendications 5 et 10, dans lequel des pattes sont prévues pour fixer l'ampoule, caractérisé en ce que les pattes s'étendent dans la cavité de fixation de l'ampoule à partir de la paroi inférieure et dans la direction longitudinale de la cavité.

14. Tampon selon l'une quelconque des revendications 5 et 10, caractérisé en ce que la partie chanfreinée de son extrémité d'introduction par rapport à une surface perpendiculaire à ron axe central, est de 90°-96°.

15. Tampon selon l'une quelconque des revendications 5 et 10, caractérisé en ce que la matière synthétique de l'enveloppe de ressage et du moyen d'étanchéité en forme de capsule est du PVC.

16. Tampon selon l'une quelconque des revendications 5 et 10, caractérisé en ce que la matière synthétique de l'enveloppe de serrage et du moyen d'étanchéité en forme de capsule est de l'ABS.

17. Tampon selon l'une quelconque des revendications 5 et 10, caractérisé en ce que la matière synthétique est renforcée par des fibres de verre.

18. Tampon selon l'une quelconque des revendications 5 et 10, caractérisé en ce que la différence entre le diamètre extérieur du tampon et le diamètre intérieur de l'évidement est de 1 mm.

19. Tampon selon l'une quelconque des revendications 5 et 10, caractérisé en ce que le diamètre extérieur du tampon en bois est égal au diamètre extérieur de l'extrémité d'introduction d'un moyen d'étanchéité en forme de capsule comportant à ladite extrémité un diamètre extérieur qui est inférieur à celui de l'extrémité opposé du moyen d'étanchéité en forme de capsule.

20. Tampon selon l'une quelconque des revendications 5 et 10, caractérisé en ce que le diamètre extérieur du moyen d'étanchéité en bois est égal au diamètre de l'extrémité d'entrée du moyen d'étanchéité en forme de capsule, lequel possède un diamètre extérieur à ladite extrémité qui est plus petit que celui de son extrémité opposée.

21. Tampon selon la revendication 3, caractérisé en ce que le disque est fabriqué en contreplaqué.

22. Procédé de traitement d'un évidement ménagé dans du bois pour recevoir un tampon selon la revendication 1, caractérisé en ce qu'une couche de composition liquide ou de composition pâteuse, par exemple une couche d'apprêt, de diment, de colle, de mastic, d'un agent de réparation ou analogue, est déposée sur la paroi intérieure de l'évidement.

FIG.1

FIG.2

FIG.3

FIG. 4

FIG. 5

FIG.6

FIG. 8

FIG. 9

FIG.7